(19)

Europäisches Patentamt

European Patent Office

Office européen des brevets

(11) **EP 4 386 749 A1**

(12) **EUROPEAN PATENT APPLICATION**

(43) Date of publication:
**19.06.2024 Bulletin 2024/25**

(21) Application number: **22213991.7**

(22) Date of filing: **15.12.2022**

(51) International Patent Classification (IPC):
**G10L 25/48** (2013.01)     G10L 25/30 (2013.01)
G10L 25/66 (2013.01)     G10L 15/00 (2013.01)
G10L 15/22 (2006.01)     G10L 21/02 (2013.01)

(52) Cooperative Patent Classification (CPC):
**G10L 25/48;** G10L 15/00; G10L 21/02; G10L 25/30;
G10L 25/66; G10L 2015/227

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.
5656 AG Eindhoven (NL)**

(72) Inventors:
- **HARMA, Aki Sakari**
  **Eindhoven (NL)**
- **GROSSEKATHOEFER, Ulf**
  **Eindhoven (NL)**
- **OUWELTJES, Okke**
  **Eindhoven (NL)**

(74) Representative: **Philips Intellectual Property &
Standards
High Tech Campus 52
5656 AG Eindhoven (NL)**

(54) **SPEECH PROCESSING OF AUDIO SIGNAL**

(57)     An apparatus for speech processing comprises an input (101) arranged to receive an audio signal comprising a speech audio component. A determiner (105) generates a breathing waveform signal from the audio signal where the breathing waveform signal is indicative of a lung air volume of the speaker as a function of time. A speech processor (103) performs speech processing of the audio signal where the speech processing is dependent on the breathing waveform signal. The speech processor (103) may determine one or more breathing parameters, such as a breathing rate, breathing volume, timing of inspiration intervals etc., and the speech processing may be adapted in response to such breathing parameters. The speech processing may typically be a speech enhancement or a speech recognition processing.

**FIG. 1**

**Description**

FIELD OF THE INVENTION

The invention relates to performing speech processing of an audio signal, and in particular, but not exclusively, to automatic speech recognition for an audio signal capturing a speaker, e.g. performing an activity such as an exercise activity.

BACKGROUND OF THE INVENTION

Speech processing of audio signals is widely applied in a large variety of practical applications, and is becoming of increasing importance and significance for many everyday activities and devices.

For example, speech enhancement may be widely applied to provide improved clarity and reproducibility for speech being captured by audio signals such as e.g. sounds captured in a real life environment. Speech encoding is also frequently performed from captured audio. For example, speech encoding of captured audio signals is an integral part of smart phones. Another speech processing application that has become increasingly frequent in recent years is that of speech recognition to e.g. provide a user interface to a device.

For example, the speech interface of a personal assistant or home speaker makes it possible to control media, navigate features, track tracking, obtain various information services etc. simply by using a voice interface and while carrying out other activities, such as e.g. during exercising.

Speech interfaces based on Automatic Speech Recognition, ASR, are also becoming very important in controlling various devices such as wearable, nearable, and IoT consumer, health, and fitness devices. Speech is the most natural interface to interface with devices during activities which involves significant user movement and variation. As an example, US20090098981A1 discloses a fitness device with speech interface used for the communicating of the user with a virtual fitness coach.

However, whereas a lot of effort has been invested in developing and optimizing speech processing algorithms for various applications, and many highly advantageous and efficient approaches have been developed, they tend to not be optimal in all circumstances. For example, many speech processing operations have been developed for specific nominal conditions, such as nominal speaker properties, nominal acoustic environments, etc. Many speech processing applications may not provide optimum performance in scenarios where the actual conditions differ from the expected nominal conditions. A number of speech processing algorithms may also be more complex or resource demanding than desired. Adapting the speech processing to try to compensate for varying properties tend to result in a less flexible, more complex, and /or more resource demanding implementations which often do not either provide optimal performance.

Hence, an improved approach for speech processing would be advantageous. In particular an approach allowing increased flexibility, improved adaptability, an improved performance, increased quality of e.g. speech enhancement, encoding, and/or recognition, reduced complexity and/or resource usage, improved remote control of audio processing, improved adaptation to variations in speaker properties and/or activities, reduced computational load, an improved user experience, facilitated implementation and/or an improved spatial audio experience would be advantageous.

SUMMARY OF THE INVENTION

Accordingly, the Invention seeks to preferably mitigate, alleviate or eliminate one or more of the above mentioned disadvantages singly or in any combination.

According to an aspect of the invention there is provided an apparatus for speech processing of an audio signal, the apparatus comprising: an input arranged to receive an audio signal comprising a speech audio component from a speaker; a determiner arranged to generate a breathing waveform signal from the audio signal, the breathing waveform signal being indicative of a lung air volume of the speaker as a function of time; and a speech processor arranged to perform a speech processing of the audio signal, the speech processing being dependent on the breathing waveform signal.

The approach may provide improved speech processing in many embodiments and scenarios. For many signals and scenarios, the approach may provide speech processing that more closely reflects variations in the properties and characteristics of the speech of the speaker. For example, it may adapt to a level of exhaustion or e.g. dyspnea of the speaker. The approach may provide facilitated adaptation and may in particular provide improved adapted speech processing without relying on or needing other inputs from other devices measuring properties of the speaker. The approach may provide an efficient implementation and may in many embodiments allow a reduced complexity and/or resource usage.

According to an optional feature of the invention, there is provided the determiner comprises: a trained artificial neural network having input nodes for receiving samples of the audio signal and output nodes arranged to provide samples of the breathing waveform signal.

This may provide particularly advantageous operation and performance in many scenarios and applications.

The approach may provide a particularly advantageous arrangement which may in many embodiments and scenarios allow a facilitated and/or improved possibility of utilizing artificial neural networks in adapting and optimizing speech processing, including typically speech enhancement and/or recognition.

The approach may in many embodiments allow an improved speech signal to be generated by allowing the system to adapt/ modify the processing of the audio signal.

The approach may provide an efficient implementation and may in many embodiments allow a reduced complexity and/or resource usage.

The artificial neural network is a trained artificial neural network.

The artificial neural network may be a trained artificial neural network trained by training data including training speech audio signals and training breathing waveform signals generated from measurements of a breathing waveform; the training employing a cost function comparing the training breathing waveform signals to breathing waveform signals generated by the artificial neural network for the training speech audio signals. The artificial neural network may be a trained artificial neural network(s) trained by training data including training speech audio signals representing a range of relevant speakers in a range of different states and performing different activities.

The artificial neural network may be a trained artificial neural network trained by training data having training input data comprising training speech audio signals, and using a cost function including a contribution indicative of a difference between measured training breathing waveform signals and breathing waveform signal generated by the artificial neural network in response to the training speech audio signals.

According to an optional feature of the invention, there is provided the speech processing comprises a speech enhancement processing.

The approach may provide improved speech enhancement and may in many scenarios allow an improved speech signal to be generated.

According to an optional feature of the invention, there is provided the speech processing comprises a speech recognition processing.

The approach may provide improved speech recognition. It may in many scenarios allow a more accurate detection of words, terms, and sentence, and may in particular allow improved speech recognition for speakers in a variety of situations, states, and activities. For example, it may allow improved speech detection for people exercising.

According to an optional feature of the invention, the speech processing includes speech recognition processing generating a plurality of recognition term candidates from the audio signal; and the speech processor is arranged to select between the recognition term candidates in response to the breathing waveform signal.

This may provide advantageous speech recognition in many scenarios and may allow this to be achieved with low complexity and resource demand. For example, it may allow the adaptation and consideration of the breathing waveform signal to be implemented as a post-processing applied to results of an existing speech recognition algorithm. The approach may provide improved backwards compatibility.

According to an optional feature of the invention, the speech processer is arranged to determine a breathing rate estimate from the breathing waveform signal and to adapt the speech processing in dependence on the breathing rate.

This may provide improved operation and performance in many embodiments. A breathing rate parameter may be a particularly suitable parameter for adapting speech as there may typically be a high correlation between some speech properties and the breathing rate.

According to an optional feature of the invention, the speech processer is arranged to determine a speech word rate from the breathing waveform signal and to adapt the speech processing in dependence on the speech word rate.

This may provide improved operation and performance in many embodiments.

According to an optional feature of the invention, the speech processer is arranged to determine a timing property for inspiration intervals from the breathing waveform signal and to adapt the speech processing in dependence on the timing property for inspiration intervals.

This may provide improved operation and performance in many embodiments. The timing property may typically be a duration, repetition time/ frequency, and/or time of the inspiration intervals.

According to an optional feature of the invention, the speech processor is arranged to determine inspiration time segments of the audio signal from the timing property and to attenuate the audio signal during the inspiration time segments.

This may provide improved operation and performance in many embodiments. The attenuation may be a partial attenuation or a full attenuation (muting) of the audio signal.

According to an optional feature of the invention, the speech processor is arranged to determine inspiration time segments of the audio signal from the timing property and to exclude the inspiration time segments from a speech recognition processing being applied to the audio signal.

This may provide improved operation and performance in many embodiments.

According to an optional feature of the invention, the speech processer is arranged to determine a breathing sound level during inspiration from the breathing waveform signal and to adapt the speech processing in dependence on the breathing sound level during inspiration.

This may provide improved operation and performance in many embodiments.

According to an optional feature of the invention, the apparatus further comprises a receiver arranged to receive speaker data indicative of at least one of a heart rate of the speaker and an activity of the speaker; and the speech processor is arranged to adapt the speech processing in dependence on the speaker data.

This may provide improved operation and/or performance in many embodiments. It may allow the speech processing to be more accurately adapted to the current conditions of the speaker.

In some embodiments, the apparatus further comprises a receiver arranged to receive heart rate data indicative of a heart rate of the speaker; and the speech processor is arranged to adapt the speech processing in dependence on the heart rate.

In some embodiments, the apparatus further comprises a receiver arranged to receive activity data indicative of an activity of the speaker; and the speech processor is arranged to adapt the speech processing in dependence on the heart rate.

According to an optional feature of the invention, the speech processor comprises a human breathing model for determining a breathing property for the speaker and the speech processor is further arranged to adapt the speech processing in response to the breathing property; and to adapt the human breathing model in dependence on the speaker data.

This may provide improved operation and/or performance in many embodiments.

According to an optional feature of the invention, the speech processor is arranged to set an initial operating parameter for the speech processing in response to the speaker data.

This may provide improved operation and/or performance in many embodiments. The initial operating parameter value may be a value that is used prior to the breathing waveform signal being determined.

According to an aspect of the invention, there is provided a method comprising: receiving an audio signal comprising a speech audio component from a speaker; generating a breathing waveform signal from the audio signal, the breathing waveform signal being indicative of a lung air volume of the speaker being; and performing a speech processing of the audio signal, the speech processing being dependent on the breathing waveform signal.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates some elements of an example of an audio apparatus in accordance with some embodiments of the invention;
FIG. 2 illustrates an example of a structure of an artificial neural network;
FIG. 3 illustrates an example of a node of an artificial neural network;
FIG. 4 illustrates some elements of an example of a training setup for an artificial neural network; and
FIG. 5 illustrates some elements of a possible arrangement of a processor for implementing elements of an apparatus in accordance with some embodiments of the invention.

DETAILED DESCRIPTION OF SOME EMBODIMENTS OF THE INVENTION

Speech processing algorithms are typically designed and optimized for nominal conditions such as speakers speaking at rest and in a quiet and relaxed environment. However, in many scenarios, the circumstances and conditions may differ substantially from the nominal conditions and as a result the speech processing may degrade from the optimum achievable performance and results.

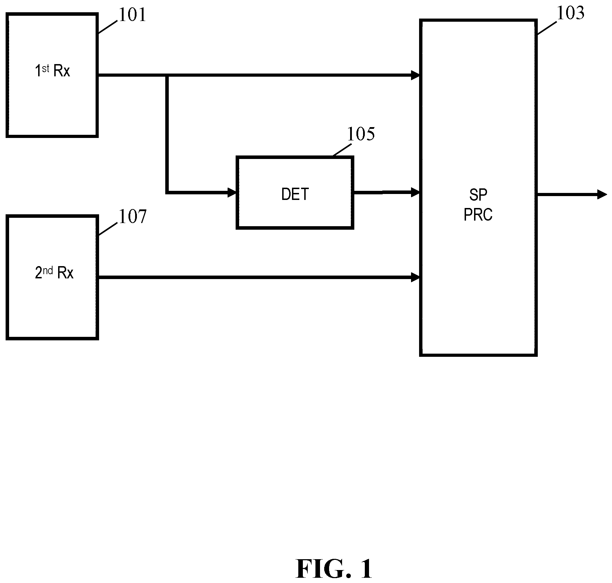

FIG. 1 illustrates some elements of a speech processing apparatus in accordance with some embodiments of the invention. The speech processing apparatus may be suitable for providing improved speech processing for speakers in many different environments and scenarios, such as for example if the speaker is exercising.

The speech processing apparatus comprises a receiver 101 which is arranged to receive an audio signal that comprises a speech audio component. The audio signal may specifically be a microphone signal representing audio captured by a microphone. The audio signal may specifically be a speech signal, and may in many embodiments be a speech signal captured by a microphone arranged to capture the speech of a single person, such as a microphone of a headset, a smartphone, or a body worn microphone. Thus, the audio signal will include a speech audio component (which also henceforth will be referred to as a speech signal) as well as possibly other sounds, such as background sounds from the environment.

The speech processing apparatus further comprises a speech processing 103 which is arranged to apply a speech processing to the received audio signal, and thus specifically to the speech audio component of the audio signal. The speech processing may specifically be a speech enhancement processing, a speech encoding, or a speech recognition process.

The speech processing apparatus further comprises a determiner/ determination circuit 105 which is arranged to generate a breathing waveform signal from the audio signal. The breathing waveform signal is indicative to the lung air volume of the speaker as a function of time. It thus reflects the breathing of the speaker and the flow of air into and out of the lungs of the speaker.

The determiner 105 is arranged to process the audio signal in order to extract information indicative of the breathing of the speaker captured by the audio signal. The determiner 105 may be arranged to receive samples of the audio input signal and produce a time series or parameters representing a time series of lung air volume measurements/ estimates.

The breathing waveform signal may thus be a time varying signal that reflects variations of the breathing of the speaker, and specifically may reflect changes in lung volume resulting from the speaker breathing. The breathing waveform signal may in some embodiments directly represent the current lung volume. In other embodiments, the breathing waveform signal may for example represent a change in the current lung volume, such as for example when the breathing waveform signal represents a flow of air being inhaled/ exhaled.

Conventionally, a breathing waveform signal can be captured using a separate sensor device such as a respiratory belt worn while the subject is talking. In the current approach, the determiner may however determine a breathing waveform signal even if no such sensor data is available by deriving the breathing waveform signal from speech data. As a low complexity example, the determiner may use speech activity detection (SAD) algorithms to segment the speech data into speech and non-speech segments. Based on the knowledge that inhaling takes place during speech pauses, the determiner 105 could use the durations and frequency of pauses as a proxy for the breathing behavior and thus determine the breathing waveform signal accordingly. In many embodiments, more accurate determination may be used including using artificial neural networks as will be described later. This may for example compensate or take into account that there are more pauses in speech than true inspiration events which could lead to errors, for example, in estimates of the respiratory rate.

The determiner 105 is coupled to the speech processor 103 which is arranged to adapt the speech processing in response to the breathing waveform signal. Thus, rather than merely perform a predetermined speech processing based on nominal or expected properties, the speech processing apparatus of FIG. 1 is arranged to adapt this speech processing to reflect the current breathing of the speaker.

The approach reflects the Inventor's realization that the breathing of a speaker impacts the speaking and that not only may it be possible to determine time varying properties resulting from the breathing from the captured audio but that these time varying properties can further be used to adapt speech processing of the same audio signal to provide improved performance, and in particular performance that may better adapt to different scenarios and user behavior.

The specific speech processing and adaptation performed may depend on the individual embodiment. However, the approach may in many embodiments be used to adapt the operation to reflect the different breathing patterns that a person may exhibit e.g. due to performing different activities. For example, when a person is exercising, the breathing may become strained resulting in a very disrupted and slowed speech. The speech processing apparatus of FIG. 1 may automatically adapt to be optimized for slow speech with longer silent intervals.

The approach may provide substantially improved speech processing in many scenarios, and may for example in particular provide advantageous operation for speakers engaging in strenuous activities, such as exercising, or have breathing or speaker difficulties.

The approach may be particularly advantageous for automatic speech recognition, e.g. providing a speech interface. For example, the speech interface of a personal assistant makes it possible to control media, navigation features, sport tracking, and various other information services during the exercise. However, typically the speech recognition is optimized, and possibly personalized, for normal speech at rest. During, and right after, a rigorous exercise, the need for oxygen is significantly increased resulting in a modified breathing which impacts the speech. This in turn increases the word-error-rate (WUR) and therefore the usability and user experience provided by the speech interface. The speech processing apparatus may detect a respiratory/ breathing pattern of the user and adapt the speech recognition to take the changed speech properties into account.

The speech recognition algorithms have been optimized for a population of users. The voice prompt that starts the interaction is also often optimized for the individual user.

In more detail, when a user is under physical stress, such as during sports or physically demanding work, and need for more respiratory effort, it will tend to impact the speech of the user. In a rigorous exercise, for example, during interval training, the speaking is severely affected. E.g. typically, the user may need to inhale after every 1-3 words or may often swallow word endings. The condition of shortness of breath is known as dyspnea and speech under such conditions will in the following be referred to as dyspneic speech. Dyspneic speech patterns start to emerge already at a light physical stress, although, human listeners generally subconsciously adapt to this and do not experience a problem in comprehending such speech.

However automated speech recognition algorithms that have been trained using speech from people at rest have serious difficulties in accurately understanding dyspneic speech, and indeed even detecting predetermined voice prompts or trigger terms may be difficult to accurately detect. During the voice commands and conversation with an interface based on automatic speech recognition, the increased breathing rate, rapid and audible inspiration, and swallowing of word endings may significantly reduce the performance. This may make the speech interface difficult and frustrating to use.

However, in the approach of the speech processing apparatus of FIG. 1, such conditions may not only be detected but the system may automatically adapt the speech processing to be suited for the current conditions.

As a low complexity example, the speech processor 103 may be arranged to select between a plurality of different speech processing algorithms/ processes. Each of these may have been optimized for a given breathing scenario. For example, one process may have been optimized/ trained for a resting breathing pattern. Another may have been optimized/ trained for a more strained but still controlled breathing pattern. Yet another may have been optimized/ trained for a maximally distressed breathing pattern. Based on the breathing waveform signal, the signal processor 103 may select the speech processing algorithm/ process that most closely match the current breathing pattern as indicated by the breathing waveform signal, and then apply this processing to the received audio signal.

Thus, in some embodiments, the speech processor 103 may be arranged to switch between different speech processing algorithms/ functions depending on the breathing waveform signal. The speech processor 103 may analyze the breathing waveform signal to determine a parameter value, such as a breathing rate. Each processing algorithm/ function may be associated with a range of breathing rates and the speech processor 103 may select the algorithm that includes the rate determined from the breathing waveform signal and apply this to the audio signal.

The individual algorithms/ functions that can be selected between may in some embodiments include approaches that e.g. use substantially the same signal processing but with parameters that have been optimized for the given conditions indicted by the breathing waveform signal. For example, the same speech processing may be used but with operating parameters being different for different breathing rates. The operating parameters may for example have been determined by training or individual manual optimization based on tests using captured audio for people for which e.g. breathing properties have been measured by other means.

In some embodiments, the individual algorithms/ functions that can be selected between may include approaches that are fundamentally different and which for example use completely different approaches and principles. For example, a different speech recognition approach may be used for a person at rest breathing, and thus speaking fast and continuously, and for a person at extreme distressed breathing being able to utter mainly individual words interrupted by substantial breathing noise.

As an example, in many embodiments, the speech processor 103 may be arranged to determine a timing property for inspiration intervals from the breathing waveform signal.

Breathing includes a series of alternating inspirations (breathing in air to the lungs) and exhalations (breathing out air from the lungs) and the speech processor 103 may be arranged to evaluate the breathing waveform signal to determine a timing property for the intervals in which the speaker is inspiring/ breathing in. Specifically, the speech processor 103 may be arranged to evaluate the audio signal/ breathing waveform signal to determine a frequency of inspiration intervals, a duration of inspiration intervals, and/or a timing of when these intervals start and/or stop.

Such parameters may for example be determined by a peak picking algorithm that locates the local minima and maxima in the breathing waveform signal, which corresponds to the start of the inhalation and exhalation phases. The breathing rate can be determined from the time between two successive in- or exhalations.

In some embodiments, the speech processor 103 may for example select between different algorithms or adapt parameters of a speech processing depending on such timing indicates. For example, if a duration of inspiration increases (e.g. relative to exhaling), it may indicate that the person is taking deep breaths which may reflect a different speech pattern than during normal breathing.

In some embodiments, however, the speech processor 103 may specifically be arranged to modify the speech processing for the inspiration time intervals. In particular, the speech processor 103 may in many embodiments be arranged to inhibit or stop the speech processing during inspiration time intervals. For example, speech processing in the form of speech recognition may simply ignore all the inspiration time intervals and only be applied to the non-inspiration time intervals.

The speech processor 103 may be arranged to determine inspiration time segments of the audio signal. These time segments may thus reflect time intervals of the audio signal during which it is estimated that the speaker is breathing in. The speech processor 103 may in some embodiments be arranged to attenuate the audio signal during the inspiration time segments. For example, a speech enhancement algorithm that is arranged to reduce noise by emphasizing the speech component of the audio signal may during the inspiration time intervals attenuate the audio signal including in many embodiments fully attenuate the signal.

Such approaches may tend to provide substantially improved performance and may allow the speech processing to adapt and specifically to be applied to parts of the audio signal where speech is present while allowing a different approach, and specifically attenuation, of parts of the audio signal where speech is unlikely to be present. The approaches may for example allow the breathing sound to be substantially reduced by eliminating heavy breathing sounds during the inspiration phase of the breathing wave signal. This may substantially improve the perceived speech clarity and may accordingly provide perceived speech. In some embodiments, at may allow for the part of the speech data that occurs during inspiration (estimated from the breathing wave) to be removed before the automatic speech recognition thereby facilitating this and reducing the risk of false detections of words. In a speech encoding embodiment, it may increase e.g. the coding efficiency as no speech encoding may be performed during the inspiration time intervals. For example, an indication of a silent or non-speech time interval may simply be inserted in the encoding data stream to indicate that no speech data is provided for this interval.

In many embodiments, the determiner 105 may comprise a trained artificial network which is arranged to determine samples of the breathing waveform signal based on samples of the audio signal. The artificial neural network may comprise input nodes that receive samples of the audio signal and output nodes that generate samples of the breathing waveform signal. The artificial neural network may for example have been trained using speech data and sensor data representing of lung air volume measurements during speech.

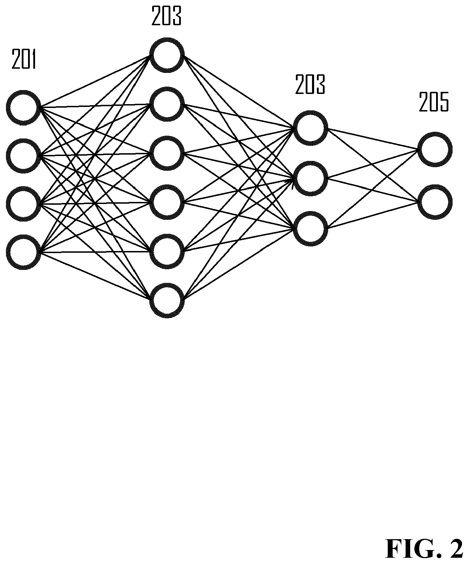

An artificial neural network as used in the described functions may be a network of nodes arranged in layers and with each node holding a node value. FIG. 2 illustrates an example of a section of an artificial neural network.

The node value for a given node may be calculated to include contributions from some or often all nodes of a previous layer of the artificial neural network. Specifically, the node value for a node may be calculated as a weighted summation of the node values of all the nodes output of the previous layer. Typically, a bias may be added and the result may be subjected to an activation function. The activation function provides an essential part of each neuron by typically providing a non-linearity. Such non-linearities and activation functions provides a significant effect in the learning and adaptation process of the neural network. Thus, the node value is generated as a function of the node values of the previous layer.

The artificial neural network may specifically comprise an input layer 201 comprising a plurality of nodes receiving the input data values for the artificial neural network. Thus, the node values for nodes of the input layer may typically directly be the input data values to the artificial neural network and thus may not be calculated from other node values.

The artificial neural network may further comprise none, one, or more hidden layers 203 or processing layers. For each of such layers, the node values are typically generated as a function of the node values of the nodes of the previous layer, and specifically a weighted combination and added bias followed by an activation function (such as a sigmoid, ReLU, or Tanh function may be applied).

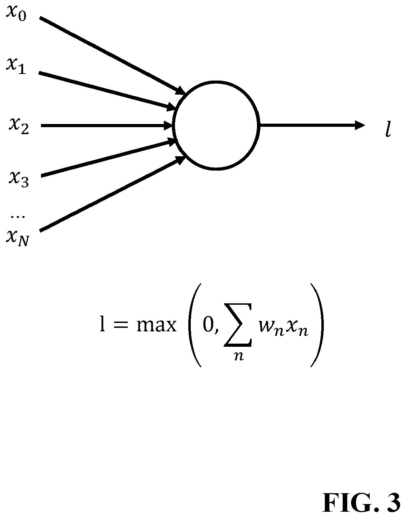

Specifically, as shown in FIG. 3, each node, which may also be referred to as a neuron, may receive input values (from nodes of a previous layer) and therefrom calculate a node value as a function of these values. Often, this includes first generating a value as a linear combination of the input values with each of these weighted by a weight:

$$k = \sum_n w_n x_n$$

where w refers to weights, x refers to the nodes of the previous layer and n is an index referring to the different nodes of the previous layer.

An activation function may then by applied to the resulting combination. For example, the node value 1 may be determined as:

$$l = f(k)$$

where the function may for example be a Rectified Linear Unit function as described in Xavier Glorot, Antoine Bordes, Yoshua Bengio Proceedings of the Fourteenth International Conference on Artificial Intelligence and Statistics, PMLR 15:315-323, 2011):

$$f(k) = ReLU(k) = \max(0, k)$$

Other often used functions include a sigmoid function or a tanh function. In many embodiments, the node output or value may be calculated using a plurality of functions. For example, both a ReLU and Sigmoid function may be combined using an activation function such as:

$$f(k) = \text{ReLU}(k) + \sigma(k)$$

Such operations may be performed by each node of the artificial neural network (except for typically the input nodes).

The artificial neural network further comprises an output layer 205 which provides the output from the artificial neural network, i.e. the output data of the artificial neural network is the node values of the output layer. As for the hidden/ processing layers, the output node values are generated by a function of the node values of the previous layer. However, in contrast to the hidden/ processing layers where the node values are typically not accessible or used further, the node values of the output layer are accessible and provide the result of the operation of the artificial neural network.

A number of different networks structures and toolboxes for artificial neural network have been developed and in many embodiments the artificial neural network may be based on adapting and customizing such a network. An example of a network architecture that may be suitable for the applications mentioned above are Long short-term memory (LSTM)[ by Sepp Hochsreiter which is described in Hochreiter, Sepp, and Jürgen Schmidhuber. "Long short-term memory." Neural computation 9.8 (1997): 1735-1780.

LSTM are an architecture used for classification and regression of time domain signals using recurrent causal or bidirectional evaluation, and has been successfully applied to audio signals. For

$$f_t = \sigma_g\left(W_f * x_t + U_f * h_{t-1} + V_f \circ c_{t-1} + b_f\right)$$

where * denotes matrix multiplication, o denotes an Hadamard product, x is the input vector, $h_{t-1}$ denotes the output vector of the previous time step, W, V, U are the network wights, while b is a bias vector.

In theory, classic (or "vanilla") artificial neural networks can keep track of arbitrary long-term dependencies in the input sequences. The problem with vanilla artificial neural networks is computational (or practical) in nature: when training a vanilla artificial neural network using back-propagation, the long-term gradients which are back-propagated can "vanish" (that is, they can tend to zero) or "explode" (that is, they can tend to infinity), because of the computations involved in the process, which use finite-precision numbers. artificial neural networks using LSTM units partially solve the vanishing gradient problem, because LSTM units allow gradients to also flow unchanged. However, LSTM networks can still suffer from the exploding gradient problem.

An artificial neural network may in some cases further be arranged to include additional contributions that allow the artificial neural network to be dynamically adapted or customized for a specific desired property or characteristics of the generated output. For example, a set of values may be provided to adapt the artificial neural network. These values may be included by providing a contribution to some nodes of the artificial neural network. These nodes may be specifically input nodes but may typically be nodes of a hidden or processing layer. Such adaptation values may for example be weighted and added as a contribution to the weighted summation/ correlation value for a given node.

The above description relates to a neural network approach that may be suitable for many embodiments and implementations. However, it will be appreciated that many other types and structures of neural network may be used. Indeed, many different approaches for generating a neural network have been, and are being, developed including neural networks using complex structures and processes that differ from the ones described above. The approach is not limited to any specific neural network approach and any suitable approach may be used without detracting from the invention.

Artificial neural networks are adapted to specific purposes by a training process which is used to adapt/ tune/ modify the weights and other parameters (e.g. bias) of the artificial neural network. It will be appreciated that many different training processes and algorithms are known for training artificial neural networks. Typically, training is based on large training sets where a large number of examples of input data are provided to the network. Further, the output of the artificial neural network is typically (directly or indirectly) compared to an expected or ideal result. A cost function may be generated to reflect the desired outcome of the training process. In a typical scenario known as supervised learning, the cost function often represents the distance between the prediction and the ground truth for a particular input data. Based on the cost function, the weights may be changed and by reiterating the process for the modified weights, the artificial neural network may be adapted towards a state for which the cost function is minimized.

In more detail, during a training step the neural network may have two different flows of information from input to output (forward pass) and from output to input (backward pass). In the forward pass, the data is processed by the neural network as described above while in the backward pass the weights are updated to minimize the cost function. Typically, such a backward propagation follows the gradient direction of the cost function landscape. In other words, by comparing the predicted output with the ground truth for a batch of data input, one can estimate the direction in which the cost function is minimized and propagate backward, by updating the weights accordingly. Other approaches known for training artificial neural networks include for example Levenberg-Marquardt algorithm, the conjugate gradient method, and the Newton method etc.

In the present case, training may specifically include a training set comprising a potentially large number of pairs of a captured audio signals and measured breathing waveform signals. The measured breathing waveform signal may be generated from a sensor signal of a sensor arranged to measure a property dependent on the lung air volume. The training of the artificial neural network may thus be performed using a training set comprising linked audio/ speech data/ signals and sensor data/ signals representing of lung air volume measurements during the speech.

In some embodiments, training data may be audio signals in time segments corresponding to the processing time intervals of the artificial neural networks being trained, e.g. the number of samples in a training audio signal may correspond to a number of samples corresponding to the input nodes of the artificial neural network(s) being trained. Each training example may thus correspond to one operation of the artificial neural network(s) being trained. Usually, however, a batch of training samples is considered for each step to speed up the training process. Furthermore, many upgrades to gradient descent are possible also to speed up convergence or avoid local minima in the cost function landscape.

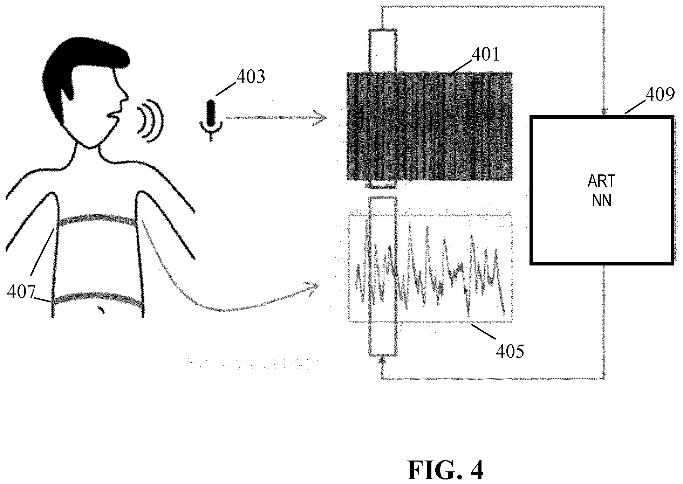

FIG. 4 illustrates an example of how training data may be generated by dedicated tests. A speech audio signal 401 may be captured by a microphone 403 during a time interval in which a person is speaking. The resulting captured audio signal may be fed to the artificial neural network 405 as input data (suitable processing such as amplification, digitization, filtering may be performed prior to generating the test audio signal being fed to the artificial neural network. Further, a breathing waveform signal 407 is determined as a sensor signal from a suitable lung volume sensor 409 that is e.g. positioned on the user. For example, the sensor 409 may be a respiratory inductive plethysmography (rip) sensor or a nasal canula flow rate sensor.

A large number of such measurements may be made to generate a large number of pairs of training audio signals and breathing waveform signal. These signals may then be applied and used to train the artificial neural network with a cost function being determined as the difference between the breathing waveform signal generated by the artificial neural network for the training audio signal and the measured training breathing waveform signal. The artificial neural network may then be adapted based on such a cost function as known in the art. For example, a cost value for each training audio signal and/or for the combined set of training downmix audio signals (e.g. an average cost value for the training sets is determined) may be determined. Typically, the cost function will include at least one component that reflects how close a generated signal is to a reference signal, i.e. a so-called reconstruction error. In some embodiments, the cost function will include at least one component that reflects how close a generated signal is to a reference signal from a perceptual point of view. The reference signal may in the example of FIG. 4 specifically be the measured breathing waveform signal.

As described previously, the approach may provide improved performance for a range of speech processing applications.

In particular for automated speech recognition, the approach may provide substantially improved performance by the process being adapted to the current properties of the speaker.

For example, as previously mentioned, the speech processor 103 may be arranged to determine inspiration time segments of the audio signal corresponding to times when the speaker is breathing in and accordingly is not speaking. The speech processor 103 may then be arranged to exclude these the inspiration time segments from the speech recognition processing being applied to the audio signal. Thus, times for which the breathing waveform signal may indicate that speech is highly unlikely can be excluded from speech recognition thereby reducing the risk of erroneously detecting words when no speech is present. It may also improve accuracy detection for other times as it can be estimated when words may be spoken.

As another example, the breathing waveform signal may be used to adapt speech recognition by e.g. estimating the word rate from the level of exertion and distress in the breathing pattern as estimated from the breathing waveform signal.

In some embodiments, the speech processor 103 may be arranged to (first) perform speech recognition operation without consideration of the breathing waveform signal or any parameters derived therefrom. However, rather than merely providing an estimated term or sentence, the speech recognition may generate a plurality of different candidates for estimates of what may have been spoken. The speech processor 103 may then be arranged to select between the different candidates based on the breathing waveform signal. For example, a waveform of activity for the estimated sentences may be compared to the breathing waveform signal and the selection may be based on how closely these match. For example, sentences that are aligned with the inspiration intervals may be selected over sentences that are not aligned with the inspiration intervals (and which e.g. includes speech during estimated inspiration intervals).

As another example, selection between candidates may be based on a distress level of the breathing. For example, when a user is relaxed, the word rate of speech is typically much higher than when the user is highly distressed and experiencing dyspnea (e.g. due to strenuous physical exercise). Thus, the speech processor 103 may be arranged to select between candidates based on the word rate of these. For example, if the breathing waveform signal indicates that the speaker is relaxed, the candidate with the highest word rate may be selected and if the breathing waveform signal indicates that the speaker is experiencing dyspnea, it may proceed to select the candidate with the lowest word rate.

Of course, in many scenarios, the breathing waveform signal may only be a factor in selecting between candidates and other parameters may also be considered. For example, the speech recognition may in addition to candidate terms also estimate a confidence or reliability value for each candidate/ estimate, and the selection may further take such a confidence level into account.

A particular advantage of such approaches is that improved detection can be achieved by further considering the breathing properties of the speaker, yet a conventional speech recognition module can be used. Thus, a post processing of results from an existing speech recognition algorithm can be used to provide improved performance while allowing backwards compatibility and allowing existing recognition algorithms to be used.

In many embodiments, the speech processing may be a speech encoding where captured speech e.g. is encoded for efficient transmission or distribution over a suitable communication channel. As previously mentioned, a more efficient encoding may typically be achieved simply by not encoding any signal during the inspiration time segments, or by assigning fewer bits to the signal in the entropy coding during inspiration periods.

As another example, the information about the respiratory wave can be used to control voice manipulation, for example, to conceal the talkers state of being exhausted. For example, the system may detect the state of respiratory difficulty by detecting an increase respiratory rate of the talker. Next, a speech synthesizer, such as a Wavenet model, can be used to resynthesize a new speech signal resembling the voice of the same talker but with a different respiratory wave pattern corresponding to a talker with a lower respiratory rate.

In some embodiments, the speech processing may be a speech enhancement. Such a speech enhancement may for example be used to provide a clearer speech signal with e.g. other audio sources and noise in the audio signal being reduced. For example, as previously described, the audio signal may be attenuated during inspiration time segments. As another example, different frequencies may be attenuated depending on the breathing waveform signal thereby specifically attenuating frequencies that tend to be more predominant for some breathing noises. As another example, the breathing waveform signal may indicate transitions or phases in the breathing cycle which tend to be associated with specific sounds, and the speech processing may be arranged to generate corresponding signals and apply them in antiphase to provide an audio cancelling effect for such sounds.

In many embodiments, the speech processor 103 may be arranged to evaluate the breathing waveform signal to determine one or more parameters of the breathing of the speaker. It may further be arranged to adapt the speech processing based on the determined parameter value.

For example, in many embodiments, the speech processor 103 is arranged to determine a breathing rate estimate from the breathing waveform signal and to adapt the speech processing in dependence on the breathing rate.

As breathing is inherently a repeating/ periodic process, the breathing waveform signal will also be a periodic signal (or at least have a strong periodic component), and the breathing rate may be determined by determining the repetition rate/ duration of the periodic components of the breathing waveform signal. For example, the breathing waveform signal may be correlated with itself and the duration between correlation peaks may be determined and used as a measure of the breathing rate. It will be appreciated that a number of different techniques and algorithms are known for detecting periodic components in signals, and that any approach may be used without detracting from the invention.

The breathing rate may be indicative of a number of parameters that can affect the speech of a person. For example, the breathing rate may be a strong indicator of how relaxed or distressed/ exhausted the speaker is and as previously described this may affect the speech in different ways including for example the word rate, the amount of breathing noise etc. As previously described, the speech processing may be adapted to reflect these parameters.

The breathing rate may also provide information related to the timing of the inspiration time intervals/ segments. In particular, the frequency and time between inspiration time intervals may directly be given by the breathing rate.

As another example, the breathing rate may be used to adapt the speech processing by having a specific speech preprocessing method selected based on the respiratory rate of the talker. For example, a different parameters of a speech activity detection or speech enhancement algorithm is used when the talker has a low respiratory rate than when the respiratory rate is elevated, or high.

In some embodiments, the speech processor 103 is arranged to determine a speech word rate from the breathing waveform signal and to adapt the speech processing in dependence on the speech word rate.

The speech word rate may for example be determined by the output of an automatic speech recognition method.

As described, the word rate of a speaker may vary substantially based on how relaxed or stressed the speaker is. The breathing waveform signal may be used to determine a level of this and thus of the degree of dyspnea that is currently experienced by the speaker. The word rate for the given level of dyspnea may be determined (e.g. as a predetermined value for a given degree of breathing distress). The speech processing may then be performed based on the determined word rate. For example, as previously described, the speech processor 103 may perform speech recognition providing a plurality of possible candidates and the candidate having a word rate most closely matching the word rate determined from the breathing waveform signal may be selected. In some embodiments, the speech recognition may thus provide several candidates for the speech utterance and, based on the expected word rate determined from the breathing waveform signal, the speech processor 103 may in case of high dyspnea select the utterance corresponding to the lowest word rate and with long speech pause durations.

Indeed, many speech recognition systems have difficulties in case of a low word rate and pauses in dyspneic speech. However, in the approach, the parameters of the speech recognition can be adjusted to accommodate to this, or the output of the speech recognition system may be processed to adopt to the condition.

As another example, the word rate may be used to adapt the speech processing by having a specific setting in speech preprocessing or speech coding algorithm that is set based on the word rate. The setting may, for example, in a speech coder, trigger the use of a different quantization vector codebook in the encoder and decoder.

In some embodiments, the speech processor 103 is arranged to determine a breathing sound level during inspiration from the breathing waveform signal and to adapt the speech processing in dependence on the speech breathing sound level during inspiration.

The breathing sound level may for example be determined by calculating the root mean squared amplitude level of the inspiration signals, optionally weighting can be applied to account for the relative loudness as perceived by the human ear

For example, in audio recordings the inspiration signals can distract the listener from the contents of what is being said or sung. The detected sound level of the inspiration signals can in this case be a measure of how much the inspiration signals need to be attenuated in order to become inaudible.

In some embodiments, the speech processor 103 may be arranged to take other data into account than just the audio signal (and the breathing waveform signal derived therefrom).

In some embodiments, the apparatus may comprise a second receiver 107 which is arranged to receive data that is indicative of a heart rate of the speaker. The heart rate data may for example be received from a body worn heart rate monitor, from a pulse meter, or from any other device arranged to measure the pulse or heart rate of a person.

The heart rate may provide further information on the state of the user and the likelihood of dyspneic speech, and the second position parameter may be arranged to further take this into account when adapting the speech processing.

For example, when storing a plurality of different speech processes or different parameters for a given speech process, these may be divided into different ranges of a parameter determined from the breathing waveform signal, but with these ranges being further subdivided into ranges of the heart rate. Thus, a more accurate and/or granular adaptation of the speech processing can be achieved.

The approach may for example provide a particularly advantageous and synergistic effect for embodiments in which the speech processing is adapted based on a parameter of the breathing waveform signal which may not directly indicate e.g. physical exercise of the person but which could also be due to other issues. For example, it may allow differentiation between dyspnea caused by rigorous exercise and dyspnea caused by medical breathing issues and thus also occurring in a relaxed state.

As a specific example, the speech processor 103 may, based on a detected heart rate, make a prediction of the respiratory rate or word rate and use this estimate to set the parameters of a speech preprocessing or coding algorithm as discussed above. This is based on a consideration that the heart rate and the breathing rate often correlate. This is advantageous to get the best performance of the system from the first utterance of the talker before the model for the estimation of the breathing wave has access to a sufficiently long speech recording needed to be able to give the first estimate. This is also advantageous in cases the talker uses only very short utterances, for example, voice commands to control a music playback application in a wearable audio player.

In some embodiments, the second receiver 107 is arranged to receive data that is indicative of an activity of the speaker.

In some embodiments, such data may for example be provided by a user directly providing a user input, such as for example manually selecting between a set of predetermined activities. As another example, an activity may be detected from the detection of use of an external device. For example, the speech processing apparatus may be coupled to an exercise equipment and if this is in use, it may transmit data to the speech processing apparatus to indicate this use, and the speech processing apparatus may be arranged to adapt the speech processing depending on the activity.

As another example, the activity data may represent a detected physical activity such as sitting, walking, running, cycling or swimming. It may also represent a specific situation such as walking up the stairs, sitting in a meeting, giving a presentation in front of an audience, or driving a car.

As an example, the speech processor 103 may be arranged to adapt the speech processing dependent on the activity data, similarly to the case of the heart rate above, to trigger a speech processing or speech coding mode optimized to a respiratory rate that is typically associated, or in the past observed with, in the context of the detected activity. This is also advantageous in the start of the speech session and in the case of very short speech utterances such as voice commands.

In some embodiments, the speech processor 103 may comprises a human breathing model which may be used to determine a breathing property for the speaker. Such a breathing model may be adapted based on the received heart rate and/or activity. In some embodiments, the speech processor 103 may estimate a computational model that produces estimates of breathing features from activity features corresponding to the current physical activity and vitals measured using a wearable.

For example, the human breathing model may model specific biophysical processes in the organs of the body, or it may be a functional high-level metabolic model. For example, the Metabolic equivalent (MET) relates to the rate of the body's oxygen uptake for a given activity as a multiple of resting $VO_2$. Based on a known MET of an activity, the effective lung volume, $VO_2$ and the concentration of oxygen in the air, we may get an indirect estimate for the respiratory rate needed to meet the oxygen need of the subject. This may be adapted based on heart rate by a more fine-grained model which contains a specific MET values for the different intensities of a particular physical activity, based on heart rate and activity intensity measurement, for example, from light jogging to full-speed uphill running.

In some embodiments, the heart rate and/or activity data may specifically be used to set an initial operating parameter for the speech processing. The operating parameter may in many embodiments subsequently be adapted and changed based on the breathing waveform signal.

Indeed, in many embodiments, the determination of a breathing waveform signal from the audio signal, and the determination of breathing parameters from the breathing waveform signal, may require some processing, analysis, and a sufficient duration of the audio signal to be present. Accordingly, there may be a substantial delay in the adaption of the speech processing to the specific breathing conditions. The heart rate and/or activity data may be used to provide a more accurate guess/ estimate of the appropriate operating parameter.

For example, when starting up, the second receiver 107 may receive heart rate data from a chest worn heart rate monitor. Based on the current heart rate/ pulse, the speech processor 103 may set a number of operating parameters (e.g. by extracting suitable values from a Look-Up-Table). It may then begin speech processing based on these parameters while at the same time begin the determination of the breathing waveform signal and determining a breathing parameter from the breathing waveform signal. When a sufficiently accurate breathing waveform signal/ parameter has been generated, it may proceed to determine suitable operating parameters for this (again e.g. by extracting values from a Look-Up-Table previously populated e.g. based on manual tests/ optimization). The speech processor 103 may then gradually transition the operating values from their initial value set based on the heart rate and the desired value as determined from the breathing waveform signal.

The audio apparatus(s) may specifically be implemented in one or more suitably programmed processors. For example, the artificial neural network of the determiner may be implemented in one or more more such suitably programmed processors. The different functional blocks, and in particular the artificial neural network, may be implemented in separate processors and/or may e.g. be implemented in the same processor. An example of a suitable processor is provided in the following.

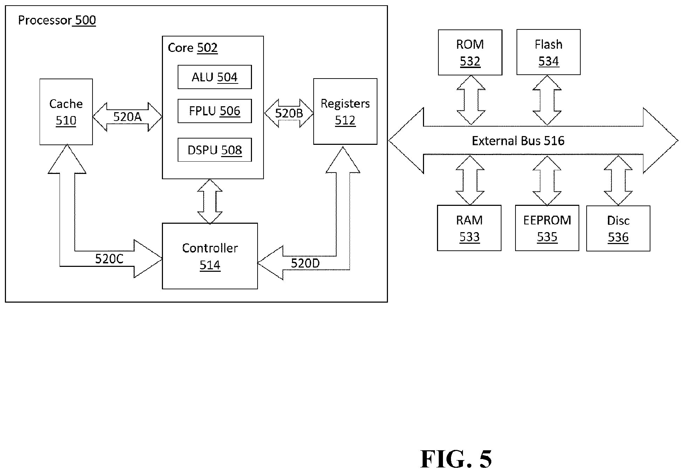

FIG. 5 is a block diagram illustrating an example processor 500 according to embodiments of the disclosure. Processor 500 may be used to implement one or more processors implementing an apparatus as previously described or elements thereof (including in particular one more artificial neural network). Processor 500 may be any suitable processor type including, but not limited to, a microprocessor, a microcontroller, a Digital Signal Processor (DSP), a Field ProGrammable Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 500 may include one or more cores 502. The core 502 may include one or more Arithmetic Logic Units (ALU) 504. In some embodiments, the core 502 may include a Floating Point Logic Unit (FPLU) 506 and/or a Digital Signal Processing Unit (DSPU) 508 in addition to or instead of the ALU 504.

The processor 500 may include one or more registers 512 communicatively coupled to the core 502. The registers 512 may be implemented using dedicated logic gate circuits (e.g., flip-flops) and/or any memory technology. In some embodiments the registers 512 may be implemented using static memory. The register may provide data, instructions and addresses to the core 502.

In some embodiments, processor 500 may include one or more levels of cache memory 510 communicatively coupled to the core 502. The cache memory 510 may provide computer-readable instructions to the core 502 for execution. The cache memory 510 may provide data for processing by the core 502. In some embodiments, the computer-readable instructions may have been provided to the cache memory 510 by a local memory, for example, local memory attached to the external bus 516. The cache memory 510 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 500 may include a controller 514, which may control input to the processor 500 from other processors and/or components included in a system and/or outputs from the processor 500 to other processors and/or components included in the system. Controller 514 may control the data paths in the ALU 504, FPLU 506 and/or DSPU 508. Controller 514 may be implemented as one or more state machines, data paths and/or dedicated control logic. The gates of controller 514 may be implemented as standalone gates, FPGA, ASIC or any other suitable technology.

The registers 512 and the cache 510 may communicate with controller 514 and core 502 via internal connections 520A, 520B, 520C and 520D. Internal connections may be implemented as a bus, multiplexer, crossbar switch, and/or any other suitable connection technology.

Inputs and outputs for the processor 500 may be provided via a bus 516, which may include one or more conductive lines. The bus 516 may be communicatively coupled to one or more components of processor 500, for example the controller 514, cache 510, and/or register 512. The bus 516 may be coupled to one or more components of the system.

The bus 516 may be coupled to one or more external memories. The external memories may include Read Only Memory (ROM) 532. ROM 532 may be a masked ROM, Electronically Programmable Read Only Memory (EPROM) or any other suitable technology. The external memory may include Random Access Memory (RAM) 533. RAM 533 may be a static RAM, battery backed up static RAM, Dynamic RAM (DRAM) or any other suitable technology. The external memory may include Electrically Erasable Programmable Read Only Memory (EEPROM) 535. The external memory may include Flash memory 534. The External memory may include a magnetic storage device such as disc 536. In some embodiments, the external memories may be included in a system.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way.

**Claims**

1. An apparatus for speech processing of an audio signal, the apparatus comprising:

   an input (101) arranged to receive an audio signal comprising a speech audio component for a speaker;
   a determiner (105) arranged to generate a breathing waveform signal from the audio signal, the breathing waveform signal being indicative of a lung air volume of the speaker as a function of time; and
   a speech processor (103) arranged to perform a speech processing of the audio signal, the speech processing being dependent on the breathing waveform signal.

2. The apparatus of claim 1 wherein the determiner (105) comprises:
   a trained artificial neural network having input nodes for receiving samples of the audio signal and output nodes arranged to provide samples of the breathing waveform signal.

3. The apparatus of any previous claim wherein the speech processing comprises a speech enhancement processing.

4. The apparatus of any previous claim wherein the speech processing comprises a speech recognition processing.

5. The apparatus of claim 4 wherein the speech processing includes speech recognition processing generating a plurality of recognition term candidates from the audio signal; and the speech processor (103) is arranged to select between the recognition term candidates in response to the breathing waveform signal.

6. The apparatus of any previous claim wherein the speech processer (103) is arranged to determine a breathing rate estimate from the breathing waveform signal, and to adapt the speech processing in dependence on the breathing rate.

7. The apparatus of any previous claim wherein the speech processer (103) is arranged to determine a speech word rate from the breathing waveform signal, and to adapt the speech processing in dependence on the speech word rate.

8. The apparatus of any previous claim wherein the speech processer (103) is arranged to determine a timing property for inspiration intervals from the breathing waveform signal, and to adapt the speech processing in dependence on the timing property for the inspiration intervals.

9. The apparatus of claim 8 wherein the speech processor (103) is arranged to determine inspiration time segments of the audio signal from the timing property, and to attenuate the audio signal during the inspiration time segments.

10. The apparatus of claim 8 or 9 wherein the speech processor (103) is arranged to determine inspiration time segments of the audio signal from the timing property, and to exclude the inspiration time segments from a speech recognition processing being applied to the audio signal.

11. The apparatus of any previous claim wherein the speech processer (103) is arranged to determine a breathing sound level during inspiration from the breathing waveform signal, and to adapt the speech processing in dependence on the breathing sound level during inspiration.

12. The apparatus of any previous claim further comprising a receiver (107) arranged to receive speaker data indicative of at least one of a heart rate of the speaker and an activity of the speaker; and wherein the speech processor (103) is arranged to adapt the speech processing in dependence on the speaker data.

13. The apparatus of claim 12 wherein the speech processor (103) comprises a human breathing model for determining a breathing property for the speaker, and the speech processor (103) is further arranged to adapt the speech processing in response to the breathing property; and to adapt the human breathing model in dependence on the speaker data.

14. The apparatus of claim 12 or 13 wherein the speech processor (103) is arranged to set an initial operating parameter for the speech processing in response to the speaker data.

15. A method of speech processing of an audio signal, the method comprising:

   receiving an audio signal comprising a speech audio component for a speaker;
   generating a breathing waveform signal from the audio signal, the breathing waveform signal being indicative of a lung air volume of the speaker as a function of time; and
   performing a speech processing of the audio signal, the speech processing being dependent on the breathing waveform signal.

16. A computer program product comprising computer program code means adapted to perform all the steps of claim 15 when said program is run on a computer.

**FIG. 1**

**FIG. 2**

$$l = \max\left(0, \sum_{n} w_n x_n\right)$$

**FIG. 3**

**FIG. 4**

**FIG. 5**

**EUROPEAN SEARCH REPORT**

Europäisches
Patentamt
European
Patent Office
Office européen
des brevets

Application Number

EP 22 21 3991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 529 670 B1 (MICHAELIS PAUL ROLLER [US]) 5 May 2009 (2009-05-05) | 1,4,5, 15,16 | INV. G10L25/48 |
| Y | * column 1, line 21 - line 24 * <br> * column 4, line 51 - line 53 * <br> * column 6, line 4 - column 8, line 12 * <br> * claim 1 * <br> * figure 1 * | 2 | ADD. G10L25/30 G10L25/66 G10L15/00 G10L15/22 G10L21/02 |
| A | EP 4 099 318 A1 (SONY GROUP CORP [JP]) 7 December 2022 (2022-12-07) <br> * paragraphs [0015], [0030], [0031], [0047], [0075], [0092], [0143], [0173], [0196] * | 1,2,4,5, 15,16 | |
| Y | US 2021/146082 A1 (HÄRMÄ AKI SAKARI [NL] ET AL) 20 May 2021 (2021-05-20) <br> * paragraphs [0010], [0057], [0058] * | 2 | |
| Y | MOSTAANI ZOHREH ET AL: "On The Relationship Between Speech-Based Breathing Signal Prediction Evaluation Measures and Breathing Parameters Estimation", <br> ICASSP 2021 - 2021 IEEE INTERNATIONAL CONFERENCE ON ACOUSTICS, SPEECH AND SIGNAL PROCESSING (ICASSP), IEEE, <br> 6 June 2021 (2021-06-06), pages 1345-1349, XP033955659, <br> DOI: 10.1109/ICASSP39728.2021.9414756 <br> * section 3.2 * <br> * figure 3 * | 2 | TECHNICAL FIELDS SEARCHED (IPC) <br><br> G10L <br> A61B |

The present search report has been drawn up for all claims

| Place of search | Date of completion of the search | Examiner |
|---|---|---|
| Munich | 13 March 2023 | Geißler, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

**EP 22 21 3991**

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

    see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

    1, 2, 4, 5, 15, 16

☐ The present supplementary European search report has been drawn up for those parts of the European patent application which relate to the invention first mentioned in the claims (Rule 164 (1) EPC).

<table>
<tr><td>Europäisches<br>Patentamt<br>European<br>Patent Office<br>Office européen<br>des brevets</td><td>**LACK OF UNITY OF INVENTION**<br>**SHEET B**</td><td>**Application Number**<br><br>EP 22 21 3991</td></tr>
</table>

The Search Division considers that the present European patent application does not comply with the requirements of unity of invention and relates to several inventions or groups of inventions, namely:

1. claims: 1, 2, 4, 5, 15, 16

   Apparatus of claim 1 with a trained artificial neural network for providing the samples of the breathing waveform signal
   ---

2. claim: 3

   Apparatus of claim 1 with speech processing being speech enhancement processing
   ---

3. claims: 6-11

   Apparatus of claim 1 with improved parameters derived from the breathing waveform signal
   ---

4. claims: 12-14

   Apparatus of claim 1 with speech processing adapted to speaker
   ---

## ANNEX TO THE EUROPEAN SEARCH REPORT
## ON EUROPEAN PATENT APPLICATION NO.

EP 22 21 3991

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2023

| Patent document cited in search report | | Publication date | Patent family member(s) | | Publication date |
|---|---|---|---|---|---|
| US 7529670 | B1 | 05-05-2009 | NONE | | |
| EP 4099318 | A1 | 07-12-2022 | EP | 4099318 A1 | 07-12-2022 |
| | | | JP | WO2021153427 A1 | 05-08-2021 |
| | | | US | 2023072727 A1 | 09-03-2023 |
| | | | WO | 2021153427 A1 | 05-08-2021 |
| US 2021146082 | A1 | 20-05-2021 | CN | 114730629 A | 08-07-2022 |
| | | | EP | 4062418 A1 | 28-09-2022 |
| | | | JP | 2023501176 A | 18-01-2023 |
| | | | US | 2021146082 A1 | 20-05-2021 |
| | | | WO | 2021099279 A1 | 27-05-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090098981 A1

**Non-patent literature cited in the description**

- **XAVIER GLOROT ; ANTOINE BORDES ; YOSHUA BENGIO.** Proceedings of the Fourteenth International Conference on Artificial Intelligence and Statistics. *PMLR,* 2011, vol. 15, 315-323

- **HOCHREITER, SEPP ; JÜRGEN SCHMIDHUBER.** Long short-term memory. *Neural computation,* 1997, vol. 9 (8), 1735-1780